# EUROPÄISCHE PATENTSCHRIFT

(11) **EP 2 878 556 B1**
(45) Veröffentlichungstag und Bekanntmachung des Hinweises auf die Patenterteilung: **20.04.2016**
(21) Anmeldenummer: 14189127.5
(22) Anmeldetag: 16.10.2014
(51) Int. Cl.: B65G 47/08, B26D 7/32, B65B 25/06, B65G 57/32

(54) **Vorrichtung und Verfahren zum Erstellen von Formatsätzen aus Kombinationsportionen**
System and method for generating format sets from combination portions
Dispositif et procédé de création de jeux de formats à partir de portions de combinaison

(30) Priorität: 28.11.2013 DE 102013113199
(43) Veröffentlichungstag der Anmeldung: 03.06.2015
(73) Patentinhaber: Textor Maschinenbau GmbH, 87787 Wolfertschwenden (DE)
(72) Erfinder: Fenzl, Thomas, 87439 Kempten (DE)
(74) Vertreter: Manitz, Finsterwald & Partner GbR

(56) Entgegenhaltungen:
- EP-A2- 0 274 229
- US-A1- 2004 016 331

## Beschreibung

Die vorliegende Erfindung betrifft eine Vorrichtung zum Erstellen von Formatsätzen aus Kombinationsportionen, die jeweils zumindest zwei Einzelportionen aus aufgeschnittenen Lebensmittelprodukten umfassen.

Zum Aufschneiden von Lebensmittelprodukten wie Fleisch-, Wurst- oder Käseprodukten in industriellem Rahmen werden üblicherweise Hochleistungs-Slicer eingesetzt, welche von den zugeführten Produkten mit hoher Schnittfolge einzelne Scheiben abtrennen. Die abgetrennten Scheiben können dann zu Einzelportionen zusammengefasst werden, also beispielsweise zu Anordnungen aus mehreren gestapelten, geschindelten oder rundgelegten Scheiben. Aus Effizienzgründen werden meist mehrere nebeneinander angeordnete Produkte gleichzeitig aufgeschnitten, so dass dementsprechend mehrere nebeneinander angeordnete Einzelportionen gebildet werden. Eine solche Anordnung aus nebeneinander gebildeten Einzelportionen wird auch als Portionszeile bezeichnet. Üblicherweise dient ein dem Slicer nachgeordneter Portionsförderer dazu, die gebildeten Einzelportionen zeilenweise entlang einer Förderrichtung zu fördern, um diese einer weiteren Verarbeitung zuzuführen.

Häufig ist es erwünscht, zwei oder mehr Einzelportionen in seitlich überlappender Anordnung zu einer Kombinationsportion zusammenzufassen. Bei solchen Kombinationsportionen kann es sich je nach Anwendung um Scheiben unterschiedlicher Produktsorten umfassende Mischportionen oder um sortenreine Portionen handeln. Die Kombinationsportionen werden im Allgemeinen automatisch verpackt. Gängige Verpackungsmaschinen sind jedoch nicht für eine nacheinander erfolgende Einzelverpackung ausgelegt, sondern geben einen durch eine Verpackungseinheit bestimmten mehrzeiligen Formatsatz vor. Ein solcher Formatsatz aus mehreren Zeilen von Kombinationsportionen wird dann üblicherweise mittels eines Einlegers komplett in die entsprechende Verpackungseinheit eingelegt.

Moderne Lebensmittel-Produktionslinien weisen meist eine Pufferstrecke auf, um eine Abstimmung zwischen dem aufgrund der erforderlichen Wiederbeladungen diskontinuierlich arbeitenden Slicer und der üblicherweise kontinuierlich arbeitenden Verpackungsmaschine zu erreichen. In der Pufferstrecke wird eine bestimmte Menge an Portionen vorgepuffert, um bei Bedarf die Wiederbeladezeit des Slicers von etwa 6 bis 10 Sekunden überbrücken zu können. Speziell können ein erster Pufferförderer und ein zweiter Pufferförderer in Förderrichtung gesehen aufeinanderfolgend angeordnet und dazu ausgebildet sein, Einzelportionen formatsatzweise entlang der Förderrichtung zu fördern. Häufig sind auch mehr als zwei Pufferförderer, z. B. vier oder fünf Pufferförderer, vorgesehen.

Zum Bilden von Kombinationsportionen werden herkömmlicherweise die Zeilen aus Einzelportionen mittels einer Wippe abwechselnd auf einen oberen und einen unteren Überlappungsförderer verbracht. Einer dieser Überlappungsförderer wird während des Fördervorgangs quer zu der Förderrichtung versetzt, so dass eine Zeile aus Kombinationsportionen entsteht, wenn die auf den beiden Überlappungsförderern geförderten Einzelportionen wieder zusammengeführt werden. Aus den so gebildeten Kombinationsportionen wird anschließend der Formatsatz gebildet, entweder auf der Pufferstrecke oder in einer separaten Einrichtung.

Die Wippe muss bei einer solchen Anordnung relativ schnell arbeiten, um den Takt des Portionsförderers zu halten. Da sie auf ein zeilenweises Verteilen von Einzelportionen ausgelegt ist und lediglich eine zum Aufnehmen einer Portionszeile ausreichende Länge aufweist, muss sie zudem bei einem Stellungswechsel einen vergleichsweise großen Winkel abfahren. Dieser Winkel kann sich sogar noch weiter vergrößern, falls die Wippe bedarfsweise eine zusätzliche dritte Stellung anfährt, in welcher z.B. fehlgewichtige Einzelportionen ausgeschleust werden. Im Ergebnis führt dies dazu, dass die Wippe einen mechanisch hoch belasteten Teil der Gesamtanlage darstellt und den Durchsatz der Produktionslinie begrenzt.

In der EP 0 274 229 A2 ist ein dem Oberbegriff des Anspruchs 1 entsprechendes Fördersystem für Lebensmittelprodukte offenbart, das die nebeneinander geförderten Einzelprodukte einer ankommenden Produktzeile überlappend zusammenführt.

Es ist eine Aufgabe der Erfindung, ein effektiveres und zuverlässigeres Erstellen von Formatsätzen aus Kombinationsportionen zu ermöglichen.

Die Lösung der Aufgabe erfolgt durch eine Vorrichtung mit den Merkmalen des Anspruchs 1.

Erfindungsgemäß umfasst der zweite Pufferförderer einen ersten Förderabschnitt und einen parallel zu diesem verlaufenden zweiten Förderabschnitt, wobei die Förderabschnitte zum versetzten Zusammenführen von auf ihnen formatsatzweise geförderten Einzelportionen jeweils zu einem Formatsatz aus Kombinationsportionen ausgebildet sind. Weiterhin ist der erste Pufferförderer zwischen einer zu dem ersten Förderabschnitt hinführenden Stellung und einer zu dem zweiten Förderabschnitt hinführenden Stellung verstellbar.

Die Pufferförderer werden also dazu genutzt, das Zusammenführen von Einzelportionen in überlappender Anordnung nicht wie üblich zeilenweise, sondern formatsatzweise durchzuführen. Auf eine der Pufferstrecke vorgelagerte Überlappungsstation kann dann vollständig verzichtet werden. Erfindungsgemäß sind die Pufferförderer also derart modifiziert, dass sie außer der Pufferfunktion auch eine Überlappungsfunktion erfüllen. Mit anderen Worten liegt der Erfindung der allgemeine Gedanke zugrunde, nicht zeilenweise vor dem Puffer zu überlappen, sondern formatweise im Puffer selbst. Ein Vorteil dieses Konzepts besteht darin, dass zum Verstellen des verteilenden Elements wesentlich mehr Zeit zur Verfügung steht als bei einer herkömmlichen Überlappungsstation, da nach der Übergabe eines Formatsatzes an einen der Förderabschnitte die zum Bilden eines neuen Formatsatzes erforderliche Zeit zum Verstellen nutzbar ist, bevor mit der Übergabe des neu gebildeten Formatsatzes an den anderen Förderabschnitt begonnen werden muss. Somit steht dem ersten Pufferförderer beispielsweise bei einem vierzeiligen Formatsatz im Vergleich zu einer einzeiligen Wippe die vierfache Zeit zur Verfügung.

Es ist darauf hinzuweisen, dass die Bezeichnungen "erster Pufferförderer" und "zweiter Pufferförderer" lediglich zur Unterscheidung zweier aufeinanderfolgender Pufferförderer dienen. Der zweite Pufferförderer muss also nicht notwendigerweise mit dem in Förderrichtung gesehen zweiten Förderer der Pufferstrecke identisch sein. Vielmehr kann ein beliebiger einem anderen Pufferförderer nachfolgender Pufferförderer den zweiten Pufferförderer im Sinne der Erfindung bilden. Ebenso können sich vor dem ersten Pufferförderer weitere Pufferförderer befinden. Grundsätzlich kann ein "Förderer" im Sinne der Erfindung auch eine Anordnung von mehreren separaten Einzelförderern umfassen.

Falls das Bilden von Kombinationsportionen mit mehr als zwei überlappend angeordneten Einzelportionen erwünscht ist, kann der zweite Pufferförderer auch mehr als zwei parallele Förderabschnitte umfassen. Das heißt es könnten z. B. drei oder vier übereinander verlaufende Förderabschnitte vorgesehen sein, um dreifache bzw. vierfache Überlappungen zu realisieren. Unter parallel verlaufenden Förderabschnitten sind auch solche Förderabschnitte zu verstehen, die eine unterschiedliche vertikale oder horizontale Neigung aufweisen, jedoch beide bzw. alle insgesamt einen Produkttransport in der Förderrichtung bewirken.

Weiterbildungen der Erfindung sind in den abhängigen Ansprüchen, der Beschreibung sowie der beigefügten Zeichnung angegeben.

Es kann vorgesehen sein, dass die Förderabschnitte des zweiten Pufferförderers relativ zueinander quer zu der Förderrichtung versetzbar sind und/oder dass zumindest einer der Förderabschnitte des zweiten Pufferförderers zu einem bezüglich der Förderrichtung querversetzenden Fördern ausgebildet ist. Ein querversetzendes Fördern kann beispielsweise durch schräg zur Förderrichtung verlaufende Riemen eines Riemenförderers erzielt werden. In diesem Zusammenhang ist darauf hinzuweisen, dass unter dem Begriff "Förderrichtung" die der Gesamtanlage zugrundeliegende Haupttransportrichtung zu verstehen ist. Während des Versetzens kann die lokale Bewegungsrichtung der Portionen geringfügig von dieser Haupttransportrichtung abweichen.

Es kann weiterhin vorgesehen sein, dass der Portionsförderer und/oder der erste Pufferförderer quer zu der Förderrichtung versetzbar und/oder zu einem bezüglich der Förderrichtung querversetzenden Fördern ausgebildet ist/sind. Mit anderen Worten kann das notwendige Versetzen der Einzelportionen bereits vor der Aufteilung der Formatsätze auf die Förderabschnitte des zweiten Pufferförderers erfolgen, sodass diese keinen Versatz bewerkstelligen müssen.

Gemäß einer Ausführungsform der Erfindung ist der zweite Pufferförderer als zumindest doppelstöckiger Förderer ausgebildet, wobei der erste Pufferförderer zwischen einer zu einem ersten, unteren Förderabschnitt hinführenden Stellung und einer zu einem zweiten, oberen Förderabschnitt hinführenden Stellung verschwenkbar ist. Bei dieser Ausgestaltung ist der erste Pufferförderer also im Prinzip wie eine Wippe gestaltet, weist jedoch eine im Vergleich zu einer einzeiligen Wippe größere Länge in Förderrichtung auf. Der Schwenkwinkel, um welchen der erste Pufferförderer zwecks Verteilung der Formatsätze nach oben bzw. nach unten geschwenkt werden muss, ist daher entsprechend klein.

Eine weitere Ausführungsform der Erfindung sieht vor, dass eingangsseitig des Portionsförderers eine Wippe zum Ausschleusen fehlgewichtiger Einzelportionen aus einem Produktstrom angeordnet ist. Da die Wippe in diesem Fall lediglich zwischen zwei Stellungen, nämlich einer Durchgangsstellung und einer Ausschleusstellung, verfahren werden muss und überdies ein Ausschleusen nur vergleichsweise selten erforderlich ist, liegt lediglich eine geringe mechanische Belastung der Wippenbauteile vor.

Eine weitere Ausgestaltung der Erfindung sieht vor, dass der Portionsförderer zum Ausrichten der Einzelportionen einer Portionszeile in Förderrichtung ausgebildet ist. Solche Aufreih-Förderer sind üblicherweise mehrspurig ausgebildet und dienen dazu, die Einzelportionen einer Portionszeile entlang einer quer zu der Förderrichtung verlaufenden Linie exakt zueinander auszurichten. Der erste Pufferförderer kann direkt an den Aufreih-Förderer anschließend angeordnet sein. Ein Aufreihen muss in den meisten praktischen Fällen stattfinden, da beim Aufschneidevorgang sowie bei der Portionsbildung die Positionierung nur schwer in der gewünschten Exaktheit erfolgen kann. Durch eine direkte Aufeinanderfolge von Aufreih-Förderer und erstem Pufferförderer kann die Baulänge der zugehörigen Produktionslinie gering gehalten werden.

Der Portionsförderer kann ferner zum Verteilen eines ein- oder mehrspurigen Stroms aus Einzelportionen auf höherspurige Portionszeilen aus Einzelportionen und/oder zum Auseinanderführen von Einzelportionen einer Portionszeile quer zu der Förderrichtung ausgebildet sein. Beispielsweise dienen sogenannte Linienverteiler dazu, Portionszeilen mit einer ersten Reihenzahl zu empfangen und zu Portionszeilen mit einer davon verschiedenen zweiten Reihenzahl umzuverteilen. Dadurch ist es möglich, auch Formatsätze aus Kombinationsportionen zu bilden, die sich hinsichtlich der Reihenzahl von der Anzahl der Spuren des Slicers unterscheiden. Ein derartiger Linienverteiler kann in vorteilhafter Weise dazu genutzt werden, einen zum Bilden von Kombinationsportionen erforderlichen Querversatz zwischen Einzelportionen herbeizuführen. Ein besonderer Vorteil besteht hierbei darin, dass die Versatzweite in einfacher Weise am Linienverteiler einstellbar und an einer zugehörigen Anzeige ablesbar ist.

Der erste Pufferförderer und/oder der zweite Pufferförderer ist/sind bevorzugt zum Fördern wenigstens dreizeiliger, besonders bevorzugt wenigstens vierzeiliger, Formatsätze ausgebildet. Die Vorteile der Erfindung kommen bei in Förderrichtung gesehen langen Formatsätzen besonders zur Geltung.

Es kann vorgesehen sein, dass der erste Pufferförderer und/oder der zweite Pufferförderer derart durch ein Basisgestell der Vorrichtung getragen ist/sind, dass unterhalb des ersten Pufferförderers bzw. des zweiten Pufferförderers ein Freiraum zur wenigstens teilweisen Aufnahme einer Verpackungsmaschine definiert ist. Insbesondere kann/können der erste Pufferförderer und/oder der zweite Pufferförderer bezüglich der Förderrichtung seitlich auskragend an dem Basisgestell angeordnet sein. Am Ende einer Produktionslinie zur Verarbeitung von Lebensmittelprodukten befindet sich häufig eine Verpackungsmaschine, welche aus einer bereitgestellten Kunststofffolienbahn mittels eines Tiefziehprozesses eine Anordnung von Verpackungen zur Verfügung stellt, in welche die Produkte oder Produktportionen mittels eines Einlegers formatsatzweise eingelegt werden. Um ein zuverlässiges Einlegen zu ermöglichen, müssen einige der am Ende der Produktionslinie vorhandenen Förderer oberhalb der Verpackungsmaschine positioniert sein. Ein oberhalb der Verpackungsmaschine stattfindender Überlappungsvorgang ermöglicht somit eine besonders platzsparende Ausführung einer Vorrichtung zur Verarbeitung von Lebensmittelprodukten. Für eine solche Gesamt-Anordnung aus Verarbeitungsvorrichtung und Verpackungsmaschine wird auch separat Schutz beansprucht.

Die Erfindung betrifft auch ein Verfahren zum Erstellen von Formatsätzen aus Kombinationsportionen, die jeweils zumindest zwei Einzelportionen aus aufgeschnittenen Lebensmittelprodukten umfassen, bei welchem aus zeilenweise entlang einer Förderrichtung geförderten Einzelportionen Formatsätze aus mehrzeiligen Kombinationsportionen gebildet werden, welche jeweils wenigstens zwei quer zu der Förderrichtung zueinander versetzte und überlappend angeordnete Einzelportionen umfassen.

Herkömmlicherweise werden solche formatierten Kombinationsportionen dadurch gebildet, dass zunächst zeilenweise Kombinationsportionen erzeugt und diese fertigen Kombinationsportionen anschließend zu einem Formatsatz zusammengestellt werden. Dabei tritt unter anderem das vorstehend bereits genannte Problem auf, dass eine Wippe mit hoher Geschwindigkeit zwischen zwei Stellungen verschwenkt werden muss.

Demgegenüber sieht die Erfindung vor, dass zunächst Formatsätze aus mehrzeiligen Einzelportionen gebildet werden, diese Formatsätze, insbesondere abwechselnd, einem ersten und einem zweiten Förderabschnitt eines Pufferförderers zugeführt werden, und die Formatsätze in versetztem Zustand zusammengeführt werden, um so einen Formatsatz aus mehrzeiligen Kombinationsportionen zu bilden. In Abkehr vom üblichen Vorgehen erfolgt das Bilden der Kombinationsportionen also nicht zeilenweise, sondern formatsatzweise. Dadurch kann die Überlappungsfunktion vollständig in die Pufferanordnung integriert werden, so dass eine separate Überlappungsstation entfallen und die Gesamtbaulänge reduziert werden kann. Ein formatsatzweises Verteilen der Einzelportionen auf zwei Förderabschnitte sowie ein dementsprechendes formatsatzweises überlapptes Zusammenführen kann unter geringeren mechanischen Belastungen der Anlagenteile durchgeführt werden als ein zeilenweises Überlappen mit anschließender Formatsatzbildung.

Die Formatsätze können quer zu der Förderrichtung relativ zueinander versetzt werden, während sie sich auf den beiden Förderabschnitten des Pufferförderers befinden. Insbesondere kann einer der Förderabschnitte im Ganzen quer zu der Förderrichtung versetzt oder derart eingestellt werden, beispielsweise hinsichtlich der Riemenführung, dass auf ihm ein querversetzendes Fördern erfolgt.

Eine weitere Ausführungsform der Erfindung sieht vor, dass die dem ersten Förderabschnitt zugeführten Formatsätze einerseits und die dem zweiten Förderabschnitt zugeführten Formatsätze andererseits quer zu der Förderrichtung relativ zueinander versetzt werden, bevor sie auf die Förderabschnitte des Pufferförderers gelangen. Insbesondere könnte ein stromaufwärts der Förderabschnitte angeordneter weiterer Pufferförderer oder ein separater Versatzförderer wie ein Querband das Versetzen bewerkstelligen.

Ebenso könnte vorgesehen sein, dass erste Formatsätze aus ersten Portionszeilen und zweite Formatsätze aus zweiten, quer zu der Förderrichtung relativ zu den ersten Portionszeilen versetzten Portionszeilen gebildet werden, wobei die ersten Formatsätze dem ersten Förderabschnitt des Pufferförderers und die zweiten Formatsätze dem zweiten Förderabschnitt des Pufferförderers zugeführt werden. Insbesondere könnte ein stromaufwärts der Pufferförderer vorgesehener Linienverteiler oder Spreizförderer dazu genutzt werden, bereits vor und/oder während der Formatsatzbildung das Versetzen zu bewerkstelligen.

Vorzugsweise wird zum Zuführen der Formatsätze an die beiden Förderabschnitte ein wippenartiger Pufferförderer, welcher zum formatsatzweisen Fördern von Einzelportionen ausgebildet ist, zwischen einer oberen und einer unteren Stellung verschwenkt. Aufgrund der vergleichsweise großen Förderlänge muss ein solcher wippenartiger Pufferförderer nur einen relativ geringen Schwenkwinkel überstreichen.

Die mehrzeiligen Einzelportionen werden vorzugsweise vor dem Bilden von Formatsätzen relativ zueinander in Förderrichtung ausgerichtet. Im Gegensatz zum üblichen Vorgehen, bei welchem das Aufreihen erst nach dem Überlappen stattfindet, findet also erst eine Ausrichtung in Förderrichtung statt und anschließend werden die ausgerichteten Portionen formatsatzweise überlappt. Dies ermöglicht eine wesentlich exaktere Bildung von Kombinationsportionen. Bei einem Aufreihen der Kombinationsportionen können nämlich diese selbst exakt ausgerichtet werden, ein eventueller Längsversatz der überlappenden Einzelportionen untereinander bleibt jedoch bestehen. Falls also mehrere nicht ausgerichtete Portionszeilen überlappt werden, gibt es keine Möglichkeit mehr, einen Längsfehler innerhalb der Kombinationsportionen zu korrigieren.

Eine weitere Ausführungsform der Erfindung sieht vor, dass zunächst aus mehrzeiligen Einzelportionen mit einer ersten Reihenzahl mehrzeilige Einzelportionen mit einer zweiten, größeren Reihenzahl gebildet werden und die mehrzeiligen Einzelportionen mit der zweiten Reihenzahl formatsatzweise dem Pufferförderer zugeführt werden. Somit können nicht nur Portionszeilen mit vom Slicer vorgegebener Reihenzahl, sondern auch breitere und/oder schmälere Portionszeilen bzw. Formatsätze überlappt werden, wodurch die Flexibilität der Anlage beträchtlich gesteigert werden kann.

Die Erfindung wird nachfolgend beispielhaft unter Bezugnahme auf die Zeichnung beschrieben.
- Fig. 1: ist eine schematische Seitenansicht einer Vorrichtung zum Erstellen von Formatsätzen aus Kombinationsportionen gemäß dem Stand der Technik.
- Fig. 2: ist eine schematische Seitenansicht einer erfindungsgemäßen Vorrichtung zum Erstellen von Formatsätzen aus Kombinationsportionen.
- Fig. 3: zeigt durch die Vorrichtung gemäß Fig. 2 gehandhabte Einzelportionen, Formatsätze aus Einzelportionen sowie einen Formatsatz aus Kombinationsportionen jeweils von oben.
- Fig. 4a: ist eine schematische Seitenansicht einer Vorrichtung zum Erstellen von Formatsätzen aus Kombinationsportionen gemäß einer alternativen Ausführungsform der Erfindung.
- Fig. 4b: zeigt die Vorrichtung gemäß Fig. 4a in einer schematischen Ansicht von oben.
- Fig. 4c: zeigt einen alternativ gestalteten Eingangsbereich der in Fig. 4b gezeigten Vorrichtung.

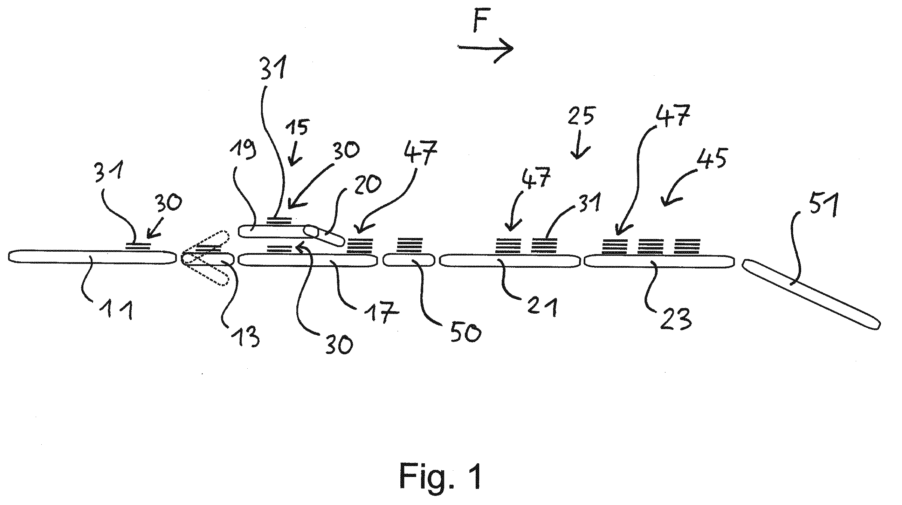

Die in Fig. 1 dargestellte und gemäß dem Stand der Technik gestaltete Vorrichtung zum Erstellen von Formatsätzen aus Kombinationsportionen umfasst mehrere Förderer, die alle als Band- oder Riemenförderer ausgebildet sind. Speziell ist ein eingangsseitiger Portionsförderer 11 dazu ausgebildet, Einzelportionen 30 aus von einem Lebensmittelprodukt abgetrennten Scheiben 31 zeilenweise entlang einer Förderrichtung F zu fördern. Das Abtrennen der Scheiben 31 von einem Lebensmittelprodukt wie einem Wurst- oder Käseriegel erfolgt eingangsseitig der in Fig. 1 dargestellten Anlage mittels eines nicht dargestellten HochleistungsSlicers, an den sich unmittelbar weitere hier nicht dargestellte Einrichtungen wie insbesondere eine Portioniereinheit anschließen, die somit dem Portionsförderer 11 vorgelagert sind.

An den Portionsförderer 11 schließt sich eine Wippe 13 an, die mittels eines motorischen Antriebs zwischen drei verschiedenen Stellungen verschwenkt werden kann. In der in durchgezogener Linie dargestellten Mittelstellung führt die Wippe 13 zu einem unteren Überlappungsförderer 17 hin. In der gestrichelt dargestellten oberen Stellung führt die Wippe 13 zu einem oberen Überlappungsförderer 19 hin, welcher sich parallel zu dem unteren Überlappungsförderer 17 erstreckt. Der obere Überlappungsförderer 19 wird mittels eines Übergangsabschnitts 20 wieder auf den unteren Überlappungsförderer 17 zurückgeführt. An den unteren Überlappungsförderer 17 schließt sich in Förderrichtung F gesehen ein Aufreih-Förderer 50 an. Auf den Aufreih-Förderer 50 folgt eine Pufferstrecke 25 mit einem ersten Pufferförderer 21 und einem zweiten Pufferförderer 23. Sowohl der erste Pufferförderer 21 als auch der zweite Pufferförderer 23 sind zum formatsatzweisen Fördern von Einzelportionen 30 ausgebildet, so dass in der Pufferstrecke 25 prinzipiell mehrzeilige Formatsätze gebildet und weitergefördert werden können.

Der untere Überlappungsförderer 17 ist als Spreizförderer oder Verteilerförderer ausgebildet und zu einem bezüglich der Förderrichtung F querversetzenden Fördern ausgebildet. Zum Bilden eines Formatsatzes 45 aus Kombinationsportionen 47 werden zunächst Zeilen aus Einzelportionen 30 auf dem Portionsförderer 11 zu der Wippe 13 gefördert und mittels dieser z.B. abwechselnd dem unteren Überlappungsförderer 17 und dem oberen Überlappungsförderer 19 zugeführt. Es werden dann jeweils eine auf dem oberen Überlappungsförderer 19 und eine auf dem unteren Überlappungsförderer 17 geförderte Zeile aus Einzelportionen 30 in versetztem Zustand zusammengeführt, so dass der Aufreih-Förderer 50 Zeilen aus überlappend angeordneten Kombinationsportionen 47 entgegennehmen kann. Der Aufreih-Förderer 50 sorgt dafür, dass die Kombinationsportionen 47 in Förderrichtung F ausgerichtet werden, bevor sie auf den ersten Pufferförderer 21 gelangen. Mittels des ersten Pufferförderers 21 und des zweiten Pufferförderers 23 wird dann in grundsätzlich bekannter Weise das Bilden und Weiterfördern von Formatsätzen 45 aus Kombinationsportionen 47 durchgeführt, insbesondere das Weiterfördern der Formatsätze 45 an einen Einleger 51, mit dem die Formatsätze 45 in Verpackungen einer nicht dargestellten Verpackungsmaschine eingelegt werden.

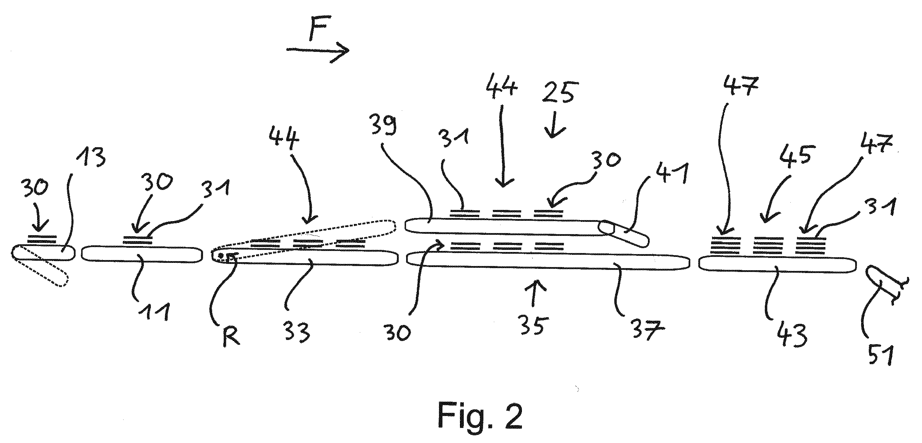

Die in Fig. 2 gezeigte, erfindungsgemäß gestaltete Vorrichtung zum Erstellen von Formatsätzen 45 aus Kombinationsportionen 47 umfasst ebenfalls einen Portionsförderer 11, welcher dazu ausgebildet ist, Einzelportionen 30 aus abgetrennten Scheiben 31 zeilenweise entlang der Förderrichtung F zu fördern. Auch eine Wippe 13 ist vorgesehen. Anders als bei der in Fig. 1 dargestellten Vorrichtung ist die Wippe 13 hier jedoch eingangsseitig des Portionsförderers 11 angeordnet und lediglich zwischen zwei Stellungen, nämlich der in durchgezogener Linie dargestellten Durchgangsstellung und einer in gestrichelter Linie dargestellten unteren Ausschleusstellung, verschwenkbar. Unmittelbar anschließend an den Portionsförderer 11 ist ein erster Pufferförderer 33 angeordnet, der zum Fördern von dreizeiligen Formatsätzen entlang der Förderrichtung F ausgebildet ist. Es versteht sich, dass der erste Pufferförderer 21 anwendungsbedingt auch zum Fördern größerer Formatsätze ausgebildet sein könnte, wobei im Wesentlichen lediglich die Länge des Pufferförderers 21 an die Anzahl der gewünschten Zeilen pro Formatsatz anzupassen ist.

Wie dargestellt ist der erste Pufferförderer 33 wippenartig gestaltet und um eine quer zu der Förderrichtung F verlaufende Rotationsachse R zwischen der in durchgezogener Linie dargestellten unteren Stellung und einer gestrichelt dargestellten oberen Stellung verschwenkbar. Der sich an den ersten Pufferförderer 33 anschließende zweite Pufferförderer 35 ist hier als doppelstöckiger Förderer ausgebildet und weist einen unteren Förderabschnitt 37 sowie einen oberen Förderabschnitt 39 auf. In der unteren Stellung führt der erste Pufferförderer 33 zu dem unteren Förderabschnitt 37 hin, wohingegen er in der oberen Stellung zu dem oberen Förderabschnitt 39 hin führt. Mittels eines Übergangsabschnitts 41 wird ein auf dem oberen Förderabschnitt 39 befindlicher Produktstrom wieder auf den unteren Förderabschnitt 37 zurückgeführt, bevor die auf diese Weise zusammengeführten Produkte einem nachfolgenden dritten Pufferförderer 43 zugeführt werden. Von diesem aus gelangen die Produkte auf einen Einleger 51, der die Produkte in Verpackungen einer nicht dargestellten Verpackungsmaschine einlegt.

Alternativ oder zusätzlich kann der Portionsförderer 11 zum Verteilen eines einoder mehrspurigen Stroms aus Einzelportionen 30 auf höherspurige Portionszeilen aus Einzelportionen 30 und/oder zum Auseinanderführen von Einzelportionen 30 einer Portionszeile quer zu der Förderrichtung F ausgebildet sein, das heißt der Portionsförderer 11 kann einen Linienverteiler und/oder einen Spreizförderer umfassen.

Zum Erstellen von Formatsätzen 45 aus Kombinationsportionen 47 mittels der in Fig. 2 dargestellten Vorrichtung werden zunächst Einzelportionen 30 zeilenweise von einem nicht dargestellten Eingangsförderer, welcher einem HochleistungsSlicer zugeordnet sein kann, entgegengenommen, wobei mittels der Wippe 13 fehlgewichtige Einzelportionen 30 ausgeschleust und einem nicht dargestellten Ausschussbehälter zugeführt werden. Zeilen von korrekt gewichtigen Einzelportionen 30 gelangen von der Wippe 13 auf den Portionsförderer 11, auf welchem die Einzelportionen 30 einer Zeile entlang einer quer zu der Förderrichtung F verlaufenden Horizontallinie ausgerichtet werden. Zu diesem Zweck ist der Portionsförderer 11 mehrspurig mit unabhängig voneinander betreibbaren Spuren ausgeführt. Grundsätzlich könnte auch ein separater Aufreih-Förderer vorgesehen sein.

Die ausgerichteten Zeilen von Einzelportionen 30 gelangen dann auf den ersten Pufferförderer 33, auf welchem durch Kombinieren von Zeilen aus Einzelportionen 30 ein hier dreizeiliger Formatsatz 44 gebildet wird. Nach Fertigstellen eines Formatsatzes 44 wird dieser komplett an einen der Förderabschnitte 37, 39 des zweiten Pufferförderers 35 übergeben. Unmittelbar nach dieser Übergabe erfolgt die Erstellung eines neuen Formatsatzes 44 auf dem ersten Pufferförderer 33. Während dieses Erstellungsvorgangs wird der erste Pufferförderer 33 in die jeweils andere der beiden dargestellten Positionen verschwenkt, wobei dafür gesorgt wird, dass der Schwenkvorgang rechtzeitig vor Fertigstellung des Formatsatzes 44 abgeschlossen ist. Auf diese Weise erfolgt ein abwechselndes Übergeben von Formatsätzen 44 aus Einzelportionen 30 an die beiden Förderabschnitte 37, 39 des zweiten Pufferförderers 35. Die auf dem unteren Förderabschnitt 37 und auf dem oberen Förderabschnitt 39 befindlichen Formatsätze 44 werden anschließend wieder zusammengeführt, wobei durch Versetzen des unteren Förderabschnitts 37 quer zu der Förderrichtung F dafür gesorgt wird, dass dieses Zusammenführen unter Überlappung der Einzelportionen 30 erfolgt. Das Querversetzen kann alternativ vor der Formatsatzbildung durch einen, z. B. in den Portionsförderer 11 integrierten, Linienverteiler bewerkstelligt werden.

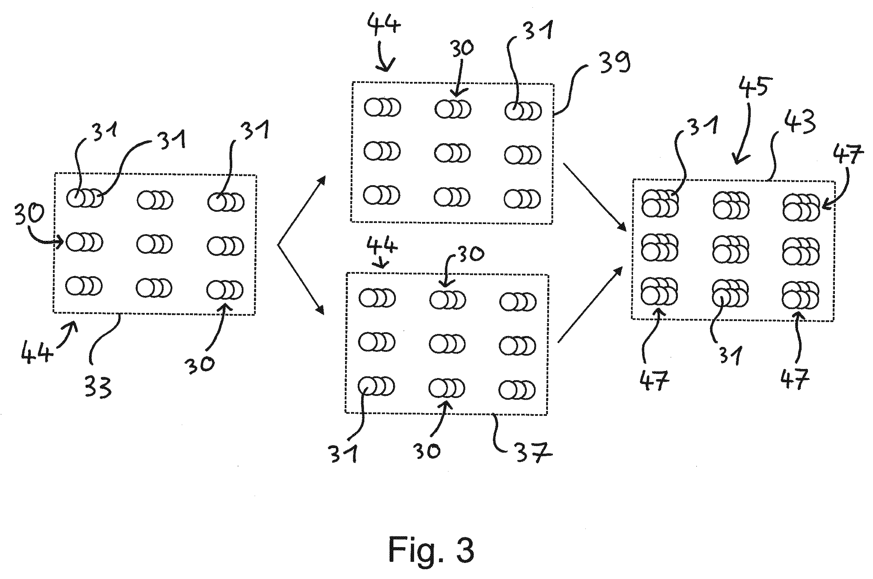

Der Vorgang des Erstellens von Formatsätzen 45 aus Kombinationsportionen 47 mittels der in Fig. 2 dargestellten Vorrichtung ist in Fig. 3 veranschaulicht. Zunächst werden, wie im linken und mittleren Teil der Fig. 3 gezeigt, Formatsätze 44 aus hier dreizeiligen Einzelportionen 30 gebildet, welche beispielhaft jeweils aus drei geschindelten Scheiben 31 gebildet sind. Die beiden Förderabschnitte 37, 39 des zweiten Pufferförderers 35 (vgl. Fig. 2) sind hier lediglich zur Vereinfachung der Darstellung nebeneinander liegend dargestellt. Jeweils zwei Formatsätze 44 werden dann wie im rechten Teil von Fig. 3 dargestellt unter einem Querversatz zusammengeführt. Im Ergebnis ist dann ein Formatsatz 45 aus Kombinationsportionen 47, welche jeweils zwei seitlich überlappende Einzelportionen 30 umfassen, vorhanden.

Dadurch, dass zunächst Formatsätze 44 aus Einzelportionen 30 gebildet werden und diese vollständigen Formatsätze 44 dann überlappend zusammengeführt werden, kann das problematische Aufteilen der Einzelportionen 30 auf die beiden verschiedenen Förderabschnitte 37, 39 unabhängig vom Zeilentakt des Portionsförderers 11 erfolgen. Zudem muss der erste Pufferförderer 33 im Vergleich zu der Wippe 13 bei der Vorrichtung gemäß Fig. 1 nur um einen relativ kleinen Winkel verschwenkt werden. Insgesamt ermöglicht die Erfindung bei der Verarbeitung von Lebensmittelprodukten einen höheren Durchsatz. Zudem gibt es keinen unerwünschten Längsversatz von Einzelportionen 30 innerhalb einer Kombinationsportion 47, da das Aufreihen bereits vor dem Überlappungsvorgang stattfindet und somit nur exakt ausgerichtete Einzelportionen 30 zusammengeführt werden.

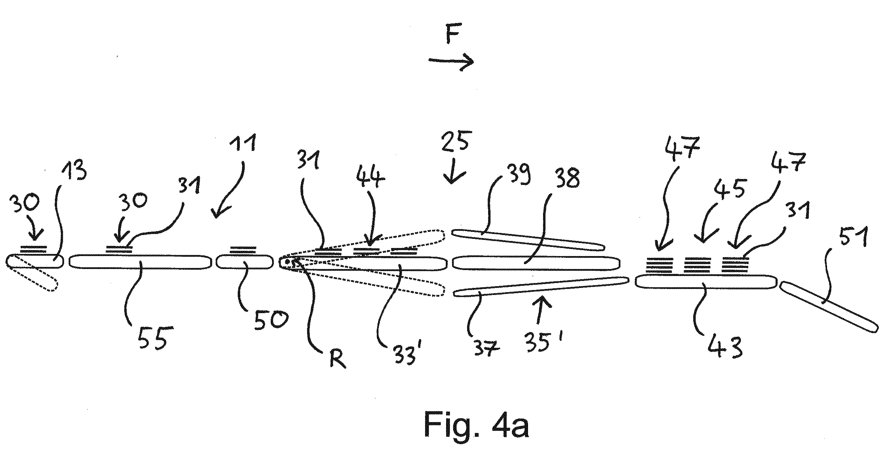

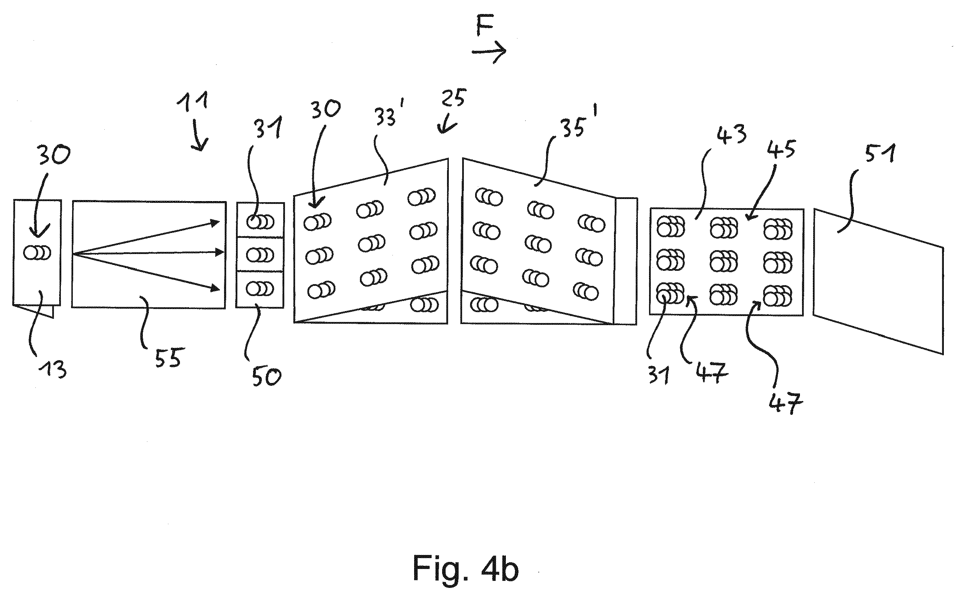

In Fig. 4a und 4b ist ein alternatives Ausführungsbeispiel einer erfindungsgemäßen Vorrichtung dargestellt, wobei gleich wirkende Bauteile mit denselben Bezugszeichen versehen sind. Der erste Pufferförderer 33' ist hier zwischen drei anstatt zwischen zwei Stellungen verstellbar. Demgemäß weist der zweite Pufferförderer 35' zusätzlich zu einem unteren Förderabschnitt 37 und einem oberen Förderabschnitt 39 einen dazwischen befindlichen mittleren Förderabschnitt 38 auf. Weiterhin erfolgt das Versetzen der Portionen 30 quer zu der Förderrichtung F hier nicht mittels des zweiten Pufferförderers 35', sondern mittels eines unmittelbar nach der Wippe 13 angeordneten Linienverteilers 55 des Portionsförderers 11. Dieser empfängt wie in Fig. 4b ersichtlich einspurig geförderte Einzelportionen 30 und verteilt diese abwechselnd auf drei Spuren des nachfolgenden Aufreih-Förderers 50. Da der Linienverteiler 55 ohnehin einen gesteuerten Querversatz von Einzelportionen 30 bewerkstelligen muss, kann er in vorteilhafter Weise zum Vorbereiten des Überlappungsvorgangs genutzt werden. Der Überlappungsabstand kann dabei unter Verwendung einer Anzeige am Linienverteiler 55 exakt eingestellt werden.

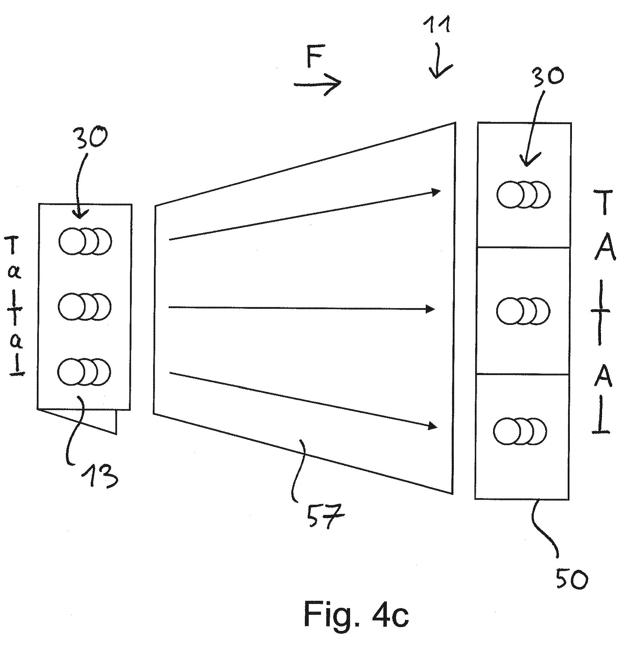

Wie in Fig. 4c dargestellt kann anstelle des Linienverteilers 55 auch ein dem Portionsförderer 11 zugeordneter Spreizförderer 57 vorgesehen sein, welcher dazu ausgebildet ist, Portionszeilen mit einem ersten Abstand a zwischen den Einzelportionen 30 in Portionszeilen mit einem zweiten, größeren Abstand A zwischen den Einzelportionen 30 zu überführen. Die Einzelportionen 30 gelangen von dem Spreizförderer 57 auf den Aufreih-Förderer 50 und werden dort in Förderrichtung F ausgerichtet. An den Aufreih-Förderer 50 schließen sich dann wie bei der in Fig. 4a und b gezeigten Ausführungsform die verschiedenen Pufferförderer 33', 35', 43 sowie der Einleger 51 an.

### Bezugszeichenliste

- 11: Portionsförderer
- 13: Wippe
- 15: Überlappungseinheit
- 17: unterer Überlappungsförderer
- 19: oberer Überlappungsförderer
- 20: Übergangsabschnitt
- 21: erster Pufferförderer
- 23: zweiter Pufferförderer
- 25: Pufferstrecke
- 30: Einzelportion
- 31: Scheibe
- 33, 33': erster Pufferförderer
- 35, 35': zweiter Pufferförderer
- 37: unterer Förderabschnitt
- 38: mittlerer Förderabschnitt
- 39: oberer Förderabschnitt
- 41: Übergangsabschnitt
- 43: dritter Pufferförderer
- 44: Formatsatz aus Einzelportionen
- 45: Formatsatz aus Kombinationsportionen
- 47: Kombinationsportion
- 50: Aufreih-Förderer
- 51: Einleger
- 55: Linienverteiler
- 57: Spreizförderer

- F: Förderrichtung
- R: Rotationsachse
- a: erster Abstand
- A: zweiter Abstand

## Patentansprüche

1. Vorrichtung zum Erstellen von Formatsätzen (45) aus Kombinationsportionen (47), die jeweils zumindest zwei Einzelportionen (30) aus aufgeschnittenen Lebensmittelprodukten umfassen, mit
einem Portionsförderer (11), welcher dazu ausgebildet ist, Einzelportionen (30) aus von einem Produkt abgetrennten Scheiben (31) zeilenweise entlang einer Förderrichtung (F) zu fördern, und
Mitteln zum Bilden von Formatsätzen (45) aus mehrzeiligen Kombinationsportionen (47), welche jeweils wenigstens zwei quer zu der Förderrichtung (F) zueinander versetzte und überlappend angeordnete Einzelportionen (30) umfassen,
**dadurch gekennzeichnet, dass**
ein erster Pufferförderer (33, 33') und ein zweiter Pufferförderer (35, 35') in Förderrichtung (F) gesehen aufeinanderfolgend angeordnet und dazu ausgebildet sind, Einzelportionen (30) formatsatzweise entlang der Förderrichtung (F) zu fördern,
wobei der zweite Pufferförderer (35, 35') einen ersten Förderabschnitt (37) und einen zumindest im Wesentlichen parallel zu diesem verlaufenden zweiten Förderabschnitt (39) umfasst, wobei die Förderabschnitte (37, 39) zum versetzten Zusammenführen von auf ihnen formatsatzweise geförderten Einzelportionen (30) jeweils zu einem Formatsatz (45) aus Kombinationsportionen (47) ausgebildet sind, und wobei der erste Pufferförderer (33, 33') zwischen einer zu dem ersten Förderabschnitt (37) hinführenden Stellung und einer zu dem zweiten Förderabschnitt (39) hinführenden Stellung verstellbar ist.

2. Vorrichtung nach Anspruch 1,
**dadurch gekennzeichnet, dass**
die Förderabschnitte (37, 38, 39) des zweiten Pufferförderers (35, 35') relativ zueinander quer zu der Förderrichtung (F) versetzbar sind und/oder dass zumindest einer der Förderabschnitte (37, 38, 39) des zweiten Pufferförderers (35) zu einem bezüglich der Förderrichtung (F) querversetzenden Fördern ausgebildet ist.

3. Vorrichtung nach Anspruch 1 oder 2,
**dadurch gekennzeichnet, dass**
der Portionsförderer (11) und/oder der erste Pufferförderer (33, 33') quer zu der Förderrichtung (F) versetzbar und/oder zu einem bezüglich der Förderrichtung (F) querversetzenden Fördern ausgebildet ist/sind.

4. Vorrichtung nach einem der vorstehenden Ansprüche,
**dadurch gekennzeichnet, dass**
der zweite Pufferförderer (35, 35') als mehrstöckiger Förderer ausgebildet ist, wobei der erste Pufferförderer (33, 33') zumindest zwischen einer zu einem ersten, unteren Förderabschnitt (37) hinführenden Stellung und einer zu einem zweiten, oberen Förderabschnitt (39) hinführenden Stellung verschwenkbar ist.

5. Vorrichtung nach einem der vorstehenden Ansprüche,
**dadurch gekennzeichnet, dass**
eingangsseitig des Portionsförderers (11) eine Wippe (13) zum Ausschleusen fehlgewichtiger Einzelportionen (30) aus einem Produktstrom angeordnet ist.

6. Vorrichtung nach einem der vorstehenden Ansprüche,
**dadurch gekennzeichnet, dass**
der Portionsförderer (11) zum Ausrichten der Einzelportionen (30) einer Portionszeile in Förderrichtung (F) ausgebildet ist.

7. Vorrichtung nach einem der vorstehenden Ansprüche,
**dadurch gekennzeichnet, dass**
der Portionsförderer (11) zum Verteilen eines ein- oder mehrspurigen Stroms aus Einzelportionen (30) auf höherspurige Portionszeilen aus Einzelportionen (30) und/oder zum Auseinanderführen von Einzelportionen (30) einer Portionszeile quer zu der Förderrichtung (F) ausgebildet ist.

8. Vorrichtung nach einem der vorstehenden Ansprüche,
**dadurch gekennzeichnet, dass**
der erste Pufferförderer (33, 33') und/oder der zweite Pufferförderer (35, 35') zum Fördern wenigstens dreizeiliger, bevorzugt wenigstens vierzeiliger, Formatsätze ausgebildet ist/sind.

9. Vorrichtung nach einem der vorstehenden Ansprüche,
**dadurch gekennzeichnet, dass**
der erste Pufferförderer (33, 33') und/oder der zweite Pufferförderer (35, 35') derart durch ein Basisgestell der Vorrichtung getragen ist/sind, dass unterhalb des ersten Pufferförderers (33, 33') bzw. des zweiten Pufferförderers (35, 35') ein Freiraum zur wenigstens teilweisen Aufnahme einer Verpackungsmaschine definiert ist.

10. Verfahren zum Erstellen von Formatsätzen (45) aus Kombinationsportionen (47), die jeweils zumindest zwei Einzelportionen (30) aus aufgeschnittenen Lebensmittelprodukten umfassen, bei welchem aus zeilenweise entlang einer Förderrichtung (F) geförderten Einzelportionen (30) Formatsätze (45) aus mehrzeiligen Kombinationsportionen (47) gebildet werden, welche jeweils wenigstens zwei quer zu der Förderrichtung (F) zueinander versetzte und überlappend angeordnete Einzelportionen (30) umfassen,
**dadurch gekennzeichnet, dass**
zunächst Formatsätze (44) aus mehrzeiligen Einzelportionen (30) gebildet werden, diese Formatsätze (44), insbesondere abwechselnd, einem ersten und einem zweiten Förderabschnitt (37, 39) eines Pufferförderers (35, 35') zugeführt werden, und die Formatsätze (44) in versetztem Zustand zusammengeführt werden, um so einen Formatsatz (45) aus mehrzeiligen Kombinationsportionen (47) zu bilden.

11. Verfahren nach Anspruch 10,
**dadurch gekennzeichnet, dass**
die Formatsätze (44) quer zu der Förderrichtung (F) relativ zueinander versetzt werden, während sie sich auf den beiden Förderabschnitten (37, 39) des Pufferförderers (35, 35') befinden.

12. Verfahren nach Anspruch 10 oder 11,
**dadurch gekennzeichnet, dass**
die dem ersten Förderabschnitt (37) zugeführten Formatsätze (44) einerseits und die dem zweiten Förderabschnitt (39) zugeführten Formatsätze (44) andererseits quer zu der Förderrichtung (F) relativ zueinander versetzt werden, bevor sie auf die Förderabschnitte (37, 39) des Pufferförderers (35, 35') gelangen.

13. Verfahren nach einem der Ansprüche 10 bis 12,
**dadurch gekennzeichnet, dass**
erste Formatsätze (44) aus ersten Portionszeilen und zweite Formatsätze (44) aus zweiten, quer zu der Förderrichtung (F) relativ zu den ersten Portionszeilen versetzten Portionszeilen gebildet werden, wobei die ersten Formatsätze (44) dem ersten Förderabschnitt (37) des Pufferförderers (35, 35') und die zweiten Formatsätze (44) dem zweiten Förderabschnitt (39) des Pufferförderers (35, 35') zugeführt werden.

14. Verfahren nach einem der Ansprüche 10 bis 13,
**dadurch gekennzeichnet, dass**
zum, insbesondere abwechselnden, Zuführen der Formatsätze (44) an die beiden Förderabschnitte (37, 39) ein wippenartiger Pufferförderer (33, 33'), welcher zum formatsatzweisen Fördern von Einzelportionen (30) ausgebildet ist, zwischen einer oberen und einer unteren Stellung verschwenkt wird, und/oder dass die mehrzeiligen Einzelportionen (30) vor dem Bilden von Formatsätzen (44) relativ zueinander in Förderrichtung (F) ausgerichtet werden,
und/oder dass zunächst aus mehrzeiligen Einzelportionen mit einer ersten Reihenzahl mehrzeilige Einzelportionen mit einer zweiten, größeren Reihenzahl gebildet werden und die mehrzeiligen Einzelportionen mit der zweiten Reihenzahl formatsatzweise dem Pufferförderer (35') zugeführt werden.

15. Anordnung umfassend eine Vorrichtung nach einem der Ansprüche 1 bis 9 und eine Verpackungsmaschine, wobei zumindest der erste Pufferförderer (33, 33') und/oder der zweite Pufferförderer (35, 35') oberhalb der Verpackungsmaschine angeordnet sind/ist, wobei vorzugsweise zumindest der erste Pufferförderer (33, 33') und/oder der zweite Pufferförderer (35, 35') bezüglich der Förderrichtung seitlich auskragend an einem Basisgestell angeordnet sind/ist.

## Claims

1. An apparatus for the preparation of format sets (45) from combination portions (47) which each comprise at least two single portions (30) of sliced food products, having
a portion conveyor (11) which is configured to convey line-wise single portions (30) of slices (31) cut off from a product along a conveying direction (F); and
means for forming format sets (45) from multi-line combination portions (47) which each comprise at least two single portions (30) offset from one another transversely to the conveying direction (F) and arranged in an overlapping manner,
**characterized in that**
a first buffer conveyor (33, 33') and a second buffer conveyor (35, 35') are arranged following one another, viewed in the conveying direction (F), and are configured to convey single portions (30) as format sets along the conveying direction (F),
with the second buffer conveyor (35, 35') comprising a first conveying section (37) and a second conveying section (39) extending at least substantially in parallel therewith, with the conveying sections (37, 39) being configured for the offset combining of single portions (30) conveyed as format sets thereon to form a respective format set (45) from combination portions (47), and with the first buffer conveyor (33, 33') being adjustable between a position leading toward the first conveying section (37) and a position leading toward the second conveying section (39).

2. An apparatus in accordance with claim 1,
**characterized in that**
the conveying sections (37, 38, 39) of the second buffer conveyor (35, 35') can be offset relative to one another transversely to the conveying direction (F); and/or **in that**
at least one of the conveying sections (37, 38, 39) of the second buffer conveyor (35) is configured for a conveying offset transversely to the conveying direction (F).

3. An apparatus in accordance with claim 1 or claim 2,
**characterized in that**
the portion conveyor (11) and/or the first buffer conveyor (33, 33') can be offset transversely to the conveying direction (F) and/or is/are configured for a conveying offset transversely with respect to the conveying direction (F).

4. An apparatus in accordance with any one of the preceding claims,
**characterized in that**
the second buffer conveyor (35, 35') is configured as a multi-level conveyor, with the first buffer conveyor (33, 33') being pivotable at least between a position leading toward a first, lower conveying section (37) and a position leading toward a second, upper conveying section (39).

5. An apparatus in accordance with any one of the preceding claims,
**characterized in that**
a rocker (13) is arranged at the incoming side of the portion conveyor (11) for the expulsion of single portions (30) of incorrect weight from a product stream.

6. An apparatus in accordance with any one of the preceding claims,
**characterized in that**
the portion conveyor (11) is configured for the alignment of the single portions (30) of a portion line in the conveying direction (F).

7. An apparatus in accordance with any one of the preceding claims,
**characterized in that**
the portion conveyor (11) is configured for the distribution of a single-track or multi-track stream of single portions (30) over higher-track portion lines of single portions (30) and/or for the leading apart of single portions (30) of a portion line transversely to the conveying direction (F).

8. An apparatus in accordance with any one of the preceding claims,
**characterized in that**
the first buffer conveyor (33, 33') and/or the second buffer conveyor (35, 35') is/are configured for the conveying of at least three-line format sets, preferably at least four-line format sets.

9. An apparatus in accordance with any one of the preceding claims,
**characterized in that**
the first buffer conveyor (33, 33') and/or the second buffer conveyor (35, 35') is/are supported by a base rack of the apparatus such that a free space is defined beneath the first buffer conveyor (33, 33') or the second buffer conveyor (35, 35') for the at least part accommodation of a packaging machine.

10. A method of preparing format sets (45) from combination portions (47) which each comprise at least two single portions (30) of sliced food products, in which method format sets (45) of multi-line combination portions (47) are formed from single portions (30) which are conveyed line-wise along a conveying direction (F) and which each comprise at least two single portions (30) arranged offset from one another transversely to the conveying direction (F) and in an overlapping manner,
**characterized in that**
format sets (44) are first formed from multi-line single portions (30) these format sets (44) are supplied, in particular alternately, to a first and to a second conveying section (37, 39) of a buffer conveyor (35, 35'), and the format sets (44) are combined in an offset state in order thus to form a format set (45) from multi-line combination portions (47).

11. A method in accordance with claim 10,
**characterized in that**
the format sets (44) are offset relative to one another transversely to the conveying direction (F) while they are located on the two conveying sections (37, 39) of the buffer conveyor (35, 35').

12. A method in accordance with claim 10 or claim 11,
**characterized in that**
the format sets (44) supplied to the first conveying section (37), on the one hand, and the format sets (44) supplied to the second conveying section (39), on the other hand, are offset relative to one another transversely to the conveying direction (F) before they move onto the conveying sections (37, 39) of the buffer conveyor (35, 35').

13. A method in accordance with any one of the claims 10 to 12,
**characterized in that**
first format sets (44) are formed from first portion lines and second format sets (44) are formed from second portion lines offset relative to the first portion lines transversely to the conveying direction (F), with the first format sets (44) being supplied to the first conveying section (37) of the buffer conveyor (35, 35') and with the second format sets (44) being supplied to the second conveying section (39) of the buffer conveyor (35, 35').

14. A method in accordance with any one of the claims 10 to 13,
**characterized in that**
a rocker-like buffer conveyor (33, 33') which is configured for the conveying as format sets of single portions (30) is pivoted between an upper and a lower position for the supply, in particular for the alternating supply, of the format sets (44) to the two conveying sections (37, 39);
and/or **in that** the multi-line single portions (30) are aligned relative to one another in the conveying direction (F) before the formation of format sets (44);
and/or **in that** multi-line single portions having a second, larger number of rows are first formed from multi-line single portions having a first number of rows and the multi-line single portions having the second number of rows are supplied in format sets to the buffer conveyor (35).

15. An arrangement comprising an apparatus in accordance with any one of the claims 1 to 9 and a packaging machine, wherein at least the first buffer conveyor (35, 35') and/or the second buffer conveyor (35, 35') is/are arranged above the packaging machine; and wherein at least the first buffer conveyor (33, 33') and/or the second buffer conveyor (35, 35') is/are preferably arranged projecting laterally at a base rack with respect to the conveying direction.

## Revendications

1. Dispositif pour établir des jeux de formats (45) à partir de portions combinées (47) qui incluent respectivement au moins deux portions individuelles (30) de produits alimentaires découpés en tranches, comprenant
un convoyeur de portions (11) qui est réalisé pour convoyer des portions individuelles (30) formées de tranches (31) découpées d'un produit, ligne par ligne le long d'une direction de convoyage (F), et
des moyens pour former des jeux de formats (45) à partir de portions combinées (47) à plusieurs lignes, qui incluent respectivement au moins deux portions individuelles (30) décalées les unes par rapport aux autres transversalement à la direction de convoyage (F) et agencées de manière à se chevaucher,
**caractérisé en ce que**
un premier convoyeur tampon (33, 33') et un second convoyeur tampon (35, 35') sont agencés l'un à la suite de l'autre, vus en direction de convoyage (F) et sont réalisés pour convoyer des portions individuelles (30) sous la forme de jeux de formats le long de la direction de convoyage (F),
dans lequel le second convoyeur tampon (35, 35') inclut un premier tronçon de convoyage (37) et un second tronçon de convoyage (39) s'étendant au moins sensiblement parallèlement à celui-ci, dans lequel les tronçons de convoyage (37, 39) sont réalisés en vue d'un regroupement en décalage de portions individuelles (30) convoyées sous la forme de jeux de formats sur eux-mêmes, respectivement pour donner un jeu de format (45) à partir de portions combinées (47), et dans lequel le premier convoyeur tampon (33, 33') est déplaçable entre une position qui mène au premier tronçon de convoyage (37) et une position qui mène au second tronçon de convoyage (39).

2. Dispositif selon la revendication 1,
**caractérisé en ce que** les tronçons de convoyage (37, 38, 39) du second convoyeur tampon (35, 35') sont susceptibles d'être décalés les uns par rapport aux autres transversalement à la direction de convoyage (F), et/ou **en ce que** l'un au moins des tronçons de convoyage (37, 38, 39) du second convoyeur tampon (35) est réalisé pour un convoyage assurant un décalage transversal par rapport à la direction de convoyage (F).

3. Dispositif selon la revendication 1 ou 2,
**caractérisé en ce que** le convoyeur de portions (11) et/ou le premier convoyeur tampon (33, 33') est/sont réalisé(s) de manière à pouvoir être décalé(s) transversalement à la direction de convoyage (F) et/ou est/sont réalisé(s) pour un convoyage assurant un décalage transversal par rapport à la direction de convoyage (F).

4. Dispositif selon l'une des revendications précédentes,
**caractérisé en ce que** le second convoyeur tampon (35, 35') est réalisé sous forme de convoyeur à plusieurs étages, dans lequel le premier convoyeur tampon (33, 33') est susceptible d'être pivoté au moins entre une première position qui mène à un premier tronçon de convoyage inférieur (37) et une seconde position qui mène à un second tronçon de convoyeur supérieur (39).

5. Dispositif selon l'une des revendications précédentes,
**caractérisé en ce qu'**il est prévu une bascule (13) agencée sur le côté entrée du convoyeur de portions (11) pour faire sortir des portions individuelles (30) de poids erroné hors d'un flux de produits.

6. Dispositif selon l'une des revendications précédentes,
**caractérisé en ce que** le convoyeur de portions (11) est réalisé pour orienter les portions individuelles (30) d'une ligne de portions dans la direction de convoyage (F).

7. Dispositif selon l'une des revendications précédentes,
**caractérisé en ce que** le convoyeur de portions (11) est réalisé pour répartir un flux de portions individuelles (30) à une ou plusieurs voies vers des lignes de portions avec un plus grand nombre de voies constituées de portions individuelles (30), et/ou pour écarter des portions individuelles (30) d'une ligne de portions transversalement à la direction de convoyage (F).

8. Dispositif selon l'une des revendications précédentes,
**caractérisé en ce que** le premier convoyeur tampon (33, 33') et/ou le second convoyeur tampon (35, 35') est/sont réalisé(s) pour convoyer des jeux de formats sur au moins trois lignes, et de préférence au moins quatre lignes.

9. Dispositif selon l'une des revendications précédentes,
**caractérisé en ce que** le premier convoyeur tampon (33, 33') et/ou le second convoyeur tampon (35, 35') est/sont porté(s) par un châssis de base du dispositif de telle façon qu'un espace libre est défini au-dessous du premier convoyeur tampon (33, 33') ou respectivement du second convoyeur tampon (35, 35') pour loger au moins partiellement une machine d'emballage.

10. Procédé pour établir des jeux de formats (45) à partir de portions combinées (47) qui incluent respectivement au moins deux portions individuelles (30) de produits alimentaires découpés en tranches, dans lequel on forme à partir de portions individuelles (30) convoyés ligne par ligne le long d'une direction de convoyage (F), des jeux de formats (45) formés de portions combinées à plusieurs lignes (47), qui incluent chacune au moins deux portions individuelles (30) décalées les unes par rapport aux autres transversalement à la direction de convoyage (F) et agencées en chevauchement,
**caractérisé en ce que**
on forme tout d'abord des jeux de formats (44) à partir de portions individuelles à plusieurs lignes (30), on amène ces jeux de formats (44), en particulier en alternance, à un premier et à un second tronçon de convoyage (37, 39) d'un convoyeur tampon (35, 35'), et les jeux de formats (44) sont regroupés dans l'état décalé, afin de former ainsi un jeu de formats (45) à partir de portions combinées à plusieurs lignes (47).

11. Procédé selon la revendication 10,
**caractérisé en ce que** les jeux de formats (44) sont décalés les uns par rapport aux autres transversalement à la direction de convoyage (F) pendant qu'ils se trouvent sur les deux tronçons de convoyage (37, 39) du convoyeur tampon (35, 35').

12. Procédé selon la revendication 10 ou 11,
**caractérisé en ce que** les jeux de formats (44) amenés au premier tronçon de convoyage (37) d'une part et les jeux de formats (44) amenés au second tronçon de convoyage (39) d'autre part sont décalés les uns par rapport aux autres transversalement à la direction de convoyage (F), avant qu'ils parviennent sur les tronçons de convoyage (37, 39) du convoyeur tampon (35, 35').

13. Procédé selon l'une des revendications 10 à 12,
**caractérisé en ce que** l'on forme des premiers jeux de formats (44) à partir de premières lignes de portions et des seconds jeux de formats (44) à partir de secondes lignes de portions décalées transversalement à la direction de convoyage (F) par rapport aux premières lignes de portions, et les premiers jeux de formats (44) sont amenés au premier tronçon de convoyage (37) du convoyeur tampon (35, 35'), et les seconds jeux de formats (44) sont amenés au second tronçon de convoyage (39) du convoyeur tampon (35, 35').

14. Procédé selon l'une des revendications 10 à 13,
**caractérisé en ce que**
pour amener, en particulier en alternance, les jeux de formats (44) aux deux tronçons de convoyage (37, 39), un convoyeur tampon (33, 33') analogue à une bascule, qui est réalisé pour convoyer par jeux de formats des portions individuelles (30), est basculé entre une position supérieure et une position inférieure,
et/ou **en ce que** les portions individuelles à plusieurs lignes (30) sont orientées les unes par rapport aux autres en direction de convoyage (F) avant la formation de jeux de formats (44),
et/ou **en ce que** l'on forme tout d'abord, à partir de portions individuelles à plusieurs lignes avec un premier nombre de rangées, des portions individuelles à plusieurs lignes avec un second nombre de rangées plus élevé, et les portions individuelles à plusieurs lignes avec le second nombre de rangées sont amenées sous forme de jeux de formats au convoyeur tampon (35').

15. Agencement comprenant un dispositif selon l'une des revendications 1 à 9 et une machine d'emballage, dans lequel au moins le premier convoyeur tampon (33, 33') et/ou le second convoyeur tampon (35, 35') est/sont agencé(s) au-dessus de la machine d'emballage, et de préférence au moins le premier convoyeur tampon (33, 33') et/ou le second convoyeur tampon (35, 35') est/sont agencé(s) en porte-à-faux latéralement, par référence à la direction de convoyage, sur un châssis de base.
